# EUROPEAN PATENT APPLICATION

(11) **EP 4 542 402 A1**
(43) Date of publication of application: **23.04.2025**
(21) Application number: 24205472.4
(22) Date of filing: 09.10.2024
(51) Int. Cl.: G06F 13/40

(54) **SYSTEMS, METHODS, AND APPARATUS FOR UPSTREAM PORT DUPLICATION ON VIRTUAL SWITCHES**

(30) Priority: 16.10.2023 US 202363544439 P; 31.07.2024 US 202418791405; 26.09.2024 KR 20240131071
(71) Applicant: Samsung Electronics Co., Ltd, Suwon-si, Gyeonggi-do 16677 (KR)
(72) Inventor: GIM, Jongmin, San Jose, CA, 95134 (US); PARK, Heekwon, San Jose, CA, 95134 (US); JUNG, Jaemin, San Jose, CA, 95134 (US); CHOI, Changho, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

An apparatus including a switch (1200) may include a first interface (1212) configured to communicate with at least one memory device (1220), and a second interface (1214) configured to communicate with a first physical connector (1230) and a second physical connector (1232), wherein the switch (1200) is configured to communicate with a device (1240) using the first physical connector (1230) using a memory access protocol. The second interface (1214) may be configured to communicate with a second device using the second physical connector (1232) using the memory access protocol. The apparatus may further include a second switch including a third interface configured to communicate with the at least one memory device, and a fourth interface configured to communicate with a third physical connector and a fourth physical connector, where the second switch may be configured to communicate with the device using the third physical connector using the memory access protocol.

## Description

### TECHNICAL FIELD

This disclosure relates generally to virtual switches, and more specifically to systems, methods, and apparatus for upstream port duplication on virtual switches.

### BACKGROUND

Generally, a switch device allows for one or more memory devices to connect to one or more host devices. The switch device may include a virtual switch that allows the one or more memory devices to be connected to the switch device using downstream ports and a host device to be connected to the switch device using an upstream port.

The above information disclosed in this Background section is only for enhancement of understanding of the background of the invention and therefore it may contain information that does not constitute prior art.

### SUMMARY

In some aspects, the techniques described herein relate to an apparatus including a switch including a first interface configured to communicate with at least one memory device, and a second interface configured to communicate with a first physical connector and a second physical connector, wherein the switch is configured to communicate with a device using the first physical connector using a memory access protocol. In some aspects, the device is a first device, and the second interface is configured to communicate with a second device using the second physical connector using the memory access protocol. In some aspects, the first physical connector is configured to connect to a connector on the device. In some aspects, the first physical connector is configured to send data to the device from the at least one memory device. In some aspects, the device is a first device, and the second physical connector is configured to send data to a second device from the at least one memory device. In some aspects, the switch is a first switch, the apparatus further includes a second switch, and the second switch includes a third interface configured to communicate with the at least one memory device, and a fourth interface configured to communicate with a third physical connector and a fourth physical connector, wherein the second switch is configured to communicate with the device using the third physical connector using the memory access protocol. In some aspects, the device is a first device, and the apparatus is further configured to connect to a second device using the second physical connector on the first switch and the fourth physical connector on the second switch. In some aspects, the second physical connector is configured to connect to a connector on a second device. In some aspects, the fourth physical connector is configured to connect to a connector on a second device. In some aspects, the apparatus further includes a second switch, wherein the device is a first device, wherein the second switch includes: a third interface configured to communicate with the at least one memory device, and a fourth interface configured to communicate with a third physical connector and a fourth physical connector, wherein the third physical connector is configured to communicate with the first device, and wherein the second physical connector and fourth physical connector are configured to communicate with a second device using the memory access protocol. In some aspects, a same data from the at least one memory device is sent to the first physical connector and the second physical connector.

In some aspects, the techniques described herein relate to a system including a device, a memory device, and a switch device including a virtual switch, the virtual switch including a first interface and a second interface, wherein the first interface is connected to the first device using a memory access protocol, and wherein the second interface is connected to the memory device using the memory access protocol. In some aspects, the device is a first device, and the system further includes a second device, wherein the second device is connected to the virtual switch using the first interface using the memory access protocol. In some aspects, the virtual switch is a first virtual switch, and the switch device further includes a second virtual switch including a third interface and fourth interface, wherein the second virtual switch is connected to the memory device using the third interface using the memory access protocol, and wherein the second virtual switch is connected to the first device using the fourth interface using the memory access protocol. In some aspects, the device is a first device, the virtual switch is a first virtual switch, the system includes a second device, and the switch device further includes: a second virtual switch including a third interface and fourth interface, wherein the second virtual switch is connected to the memory device using the third interface using the memory access protocol, wherein the second virtual switch is connected to the first device using the fourth interface using the memory access protocol, and wherein the second device is connected to the first virtual switch using the first interface and is connected to the second virtual switch using the fourth interface using the memory access protocol.

In some aspects, the techniques described herein relate to a method including receiving, at a virtual switch using a first interface, data from a memory device using a memory access protocol, and transferring, from the virtual switch using a second interface, at least a portion of the data to a first device and a second device. In some aspects, the second interface includes a first connector and a second connector, and the transferring includes: transferring, using the first connector, the at least a portion of the data to the first device using the memory access protocol, and transferring, using the second connector, the at least a portion of the data to the second device using the memory access protocol. In some aspects, the at least a portion of the data is a first portion of data, and the method further includes: transferring, from the second interface, at least a second portion of the data to a second host device. In some aspects, the virtual switch is a first virtual switch, the data is first data, and the method further includes: receiving, at a second virtual switch using a third interface, second data from the memory device using the memory access protocol, and transferring, from the second virtual switch using a fourth interface, at least a portion of the second data to the first device and the second device. In some aspects, the at least a portion of the first data is a first portion, the at least a portion of the second data is a second portion, and the method further includes interleaving the first portion and the second portion.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
FIG. 1a illustrates an example of a single virtual switch in accordance with example embodiments of the disclosure.
FIG. 1b illustrates an example of multiple virtual switches in accordance with example embodiments of the disclosure.
FIG. 1c illustrates an example of multiple virtual switches with multi-logical devices and single-logical devices in accordance with example embodiments of the disclosure.
FIG. 2a illustrates an example of an operating environment in accordance with example embodiments of the disclosure.
FIG. 2b illustrates another example of an operating environment in accordance with example embodiments of the disclosure.
FIG. 2c illustrates another example of an operating environment in accordance with example embodiments of the disclosure.
FIG. 2d illustrates another example of an operating environment in accordance with example embodiments of the disclosure.
FIG. 3 illustrates an example of multiple host devices and a multi-logical device connected to multiple virtual switches in accordance with example embodiments of the disclosure.
FIG. 4 illustrates another example of multiple host devices and a multi-logical device connected to multiple virtual switches in accordance with example embodiments of the disclosure.
FIG. 5 illustrates another example of multiple host devices and a multi-logical device connected to multiple virtual switches in accordance with example embodiments of the disclosure.
FIG. 6 illustrates another example of multiple host devices and a multi-logical device connected to multiple virtual switches with upstream port duplication in accordance with example embodiments of the disclosure.
FIG. 7 illustrates an example of multiple decoders connected to multiple virtual switches in accordance with example embodiments of the disclosure.
FIG. 8 illustrates an example of multiple decoders connected to multiple virtual switches with upstream port duplication in accordance with example embodiments of the disclosure.
FIG. 9 illustrates an example of a switch in accordance with example embodiments of the disclosure.
FIG. 10 illustrates an example of a switch with upstream port duplication in accordance with example embodiments of the disclosure.
FIG. 11 illustrates another example of a switch with upstream port duplication in accordance with example embodiments of the disclosure.
FIG. 12 illustrates an example of a switch in accordance with example embodiments of the disclosure.
FIG. 13 illustrates a flowchart of a method for upstream port duplication in a virtual switch in accordance with example embodiments of the disclosure.

### DETAILED DESCRIPTION

A switch device may allow multiple memory devices to connect to multiple host devices. A switch device may connect to the devices using one or more virtual switches, where a virtual switch allows for multiple downstream ports and a single upstream port. For example, a Virtual Compute Express Link (CXL) Switch (VCS) may support a single host (e.g., one upstream port) and multiple memory devices (e.g., multiple downstream ports). A downstream port may be connected to the multiple memory devices and the upstream port may be connected to the host using the VCS. Thus, data can be transferred from multiple memory devices using the multiple downstream ports to a single host device using the upstream port. However, an upstream port may not be able to receive the total bandwidth available from the multiple downstream ports and there may be unused capacity of the downstream port connections. One solution may be to increase the number of upstream ports. However, this solution may add additional hardware for the switch device, and may not be cost-effective or allow for scalability as the number of host devices increases.

The amount of memory bandwidth available to a host device may generally be determined by the speed of the upstream port. However, a virtual switch may only allow a single connection (e.g., a single host device) per upstream port. Thus, although the virtual switch may allow a host device to be connected to multiple memory devices, the total bandwidth available may be limited by the upstream port. For example, in the case of four memory devices, if a downstream port allows for a transfer speed of 64 GB/s, the total bandwidth available from the downstream ports would be 256 GB/s. The upstream port may also allow for a transfer speed of 64 GB/s, but since the upstream port may be connected to one host device, the bandwidth would be limited to 64 GB/s. However, in some embodiments, by duplicating the upstream port, the total upstream transfer bandwidth may be increased, allowing the virtual switch to perform transfers between host devices and memory devices.

In some embodiments, an upstream port of a virtual switch may be connected to two or more duplicated ports. In some embodiments, a duplicated port may be mapped to a root port on a host device. Thus, in some embodiments, the bandwidth of an upstream port can be increased by the number of duplicated ports. Furthermore, in some embodiments, a host device may have multiple root ports, allowing multiple virtual switches to be mapped to a single host device. Thus, the available bandwidth that can be used by a host device can be increased.

This disclosure encompasses numerous aspects relating to devices with memory and storage configurations. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustration, some embodiments may be described in the context of some specific implementation details such as devices implemented as storage devices that may use specific interfaces, protocols, and/or the like. However, the aspects of the disclosure are not limited to these or any other implementation details.

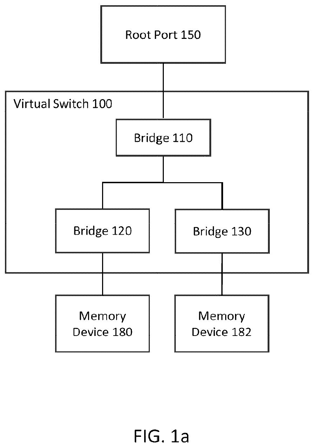

FIG. 1a illustrates an example of a single virtual switch in accordance with example embodiments of the disclosure. FIG. 1a includes a virtual switch **100,** a root port **150,** and memory devices **180** and **182.** The virtual switch **100** may have bridges **110, 120,** and **130.** In some embodiments, the root port **150** may be part of a host device. In some embodiments, the virtual switch **100** may be part of the apparatus (e.g., a switch device). In some embodiments, the apparatus may have multiple virtual switches, a virtual switch with multiple downstream ports and one upstream port. In some embodiments, the virtual switch **100** may use the bridge **110** (e.g., a virtual PCIe-to-PCIe bridge (vPPB)) to connect to the root port **150.** In some embodiments, the bridge **110** may include an interface (e.g., upstream port) to the root port **150.** In some embodiments, the virtual switch may use the bridge **120** (e.g., vPPB) to connect to the memory device **180** and may use the bridge **130** (e.g., vPPB) to connect to the memory device **182.** In some embodiments, the bridges **120** and **130** may use an interface (e.g., downstream port) to the memory devices **180** and **182.** In some embodiments, the root port **150** may connect to the virtual switch **100** via a connection (e.g., using a connector) between the root port **150** and the interface of the bridge **110** on the virtual switch **100.** In some embodiments, the memory devices **180** and **182** may connect to the virtual switch **100** via a physical connection with the bridges **120** and **130,** respectively.

In some embodiments, the memory devices **180** and **182** may be CXL-compatible devices. Alternatively, the memory devices **180** and **182** may be Peripheral Component Interconnect Express (PCIe) devices or any suitable memory device that can be connected to a virtual switch. Furthermore, the memory devices **180** and **182** may not be the same type of device, e.g., the memory device **180** may be a CXL-compatible device and the memory device **182** may be a PCIe device. In some embodiments, the virtual switch may communicate with the memory devices **180** and **182** using a memory access protocol (e.g., a CXL protocol).

In some embodiments, the bridge **110** may be a vPPB, which allows the root port **150** to connect to the virtual switch **100.** In some embodiments, the bridges **120** and **122** may also be vPPBs, allowing the memory devices **180** and **182** to connect to the virtual switch **100.** In some embodiments, the vPPBs may connect to, e.g., CXL-compatible devices, via a physical PCIe-to-PCIe bridge (PPB). In some embodiments, the virtual switch may communicate with the root port **150** using the memory access protocol (e.g., a CXL protocol).

Although FIG. 1a shows a single root port and upstream port, multiple root ports may be connected to the virtual switch **100** via a corresponding upstream port. In other words, if there are multiple virtual switches on a switch device, the upstream port of a virtual switch can connect to a corresponding root port of a host device.

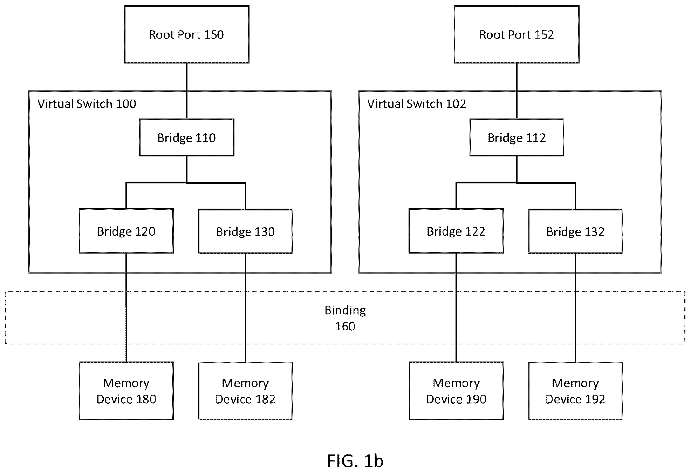

FIG. 1b illustrates an example of multiple virtual switches in accordance with example embodiments of the disclosure. The elements illustrated in Fig. 1b may be similar elements to those illustrated in Fig. 1a in which similar elements may be indicated by reference numbers ending in, and/or containing, the same digits, letters, and/or the like. FIG. 1b further includes a virtual switch **102,** root port **152,** binding **160,** and memory devices **190** and **192.** The virtual switch **102** may include bridges **112, 122,** and **132.** In some embodiments, the virtual switches **100** and **102** may be virtual switches of the same switch device. In some embodiments, the virtual switch **100** may include an interface to the root port **150** (e.g., upstream port) and an interface to the memory devices **180** and **182** (e.g., downstream ports). In some embodiments, the virtual switch **102** may include an interface to the root port **152** (e.g., upstream port) and an interface to the memory devices **190** and **192** (e.g., downstream ports). In some embodiments, root ports 150 and 152 may be ports to the same device or ports to different devices. In some embodiments, the binding **160** (e.g., a virtual-to-physical binding) may bind the vPPBs (e.g., bridges **120, 130, 122,** and **132**) to PPBs to connect to the memory devices **180, 182 190,** and **192,** respectively. In some embodiments, the root port **150** may be part of a host device, and the root port **152** may be part of the same or different host device. In some embodiments, the root port **150** may connect to the virtual switch **100** via a physical connection. In some embodiments, the root port **152** may connect to the virtual switch **100** via a physical connection. Thus, in this example, a virtual switch may be connected to a root port and multiple memory devices.

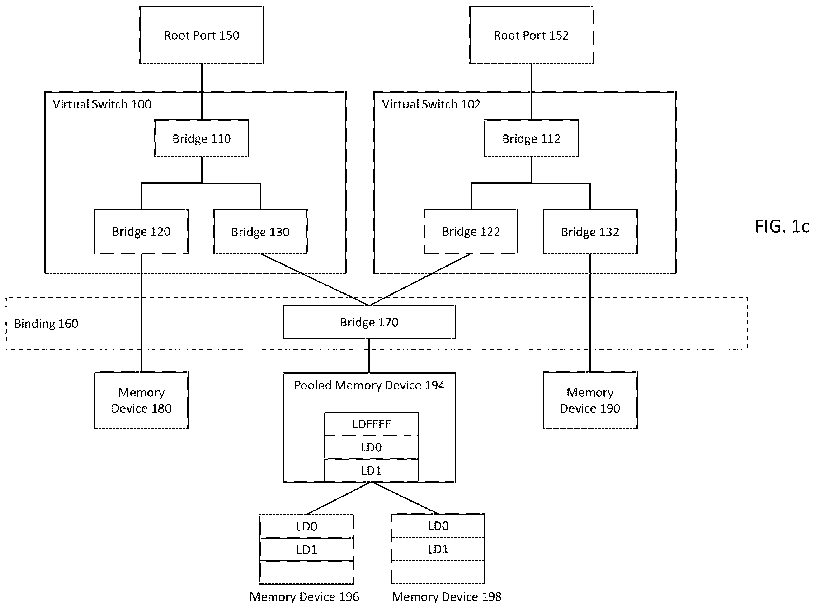

FIG. 1c illustrates an example of multiple virtual switches connecting to a combination of single memory devices and a pooled memory device in accordance with example embodiments of the disclosure. The elements illustrated in Fig. 1c may be similar elements to those illustrated in Fig. 1a and 1b in which similar elements may be indicated by reference numbers ending in, and/or containing, the same digits, letters, and/or the like. FIG. 1c further includes a bridge **170,** a pooled memory device **194,** and memory devices **196** and **198.** In some embodiments, the virtual switch **100** may include an interface to the root port **150** (e.g., upstream port) and an interface to the memory device **180** and pooled memory device **194** (e.g., downstream ports). In some embodiments, the virtual switch **102** may include an interface to the root port **152** (e.g., upstream port) and an interface to the memory device **190** and pooled memory device **194** (e.g., downstream ports). In some embodiments, the bridge **120** may be connected to the memory device **180** and the bridge **132** may be connected to the memory device **190.** In some embodiments, the bridges **130** and **132** may be connected to the pooled memory device **194** via the bridge **170.** In some embodiments, the bridge **170** may be a PPB allowing multiple vPPBs (e.g., bridges **130** and **122**) to connect to the pooled memory device **194.** In some embodiments, the pooled memory device **194** may be a Multiple-Logical Device (MLD) that can be split into multiple Logical Devices (LDs) (e.g., memory devices **196** and **198**), which allows multiple host devices to simultaneously access different portions of MLD. In some embodiments, an MLD may accommodate multiple CXL-compatible devices (e.g., 16 LDs) and may be bound to a PPB that consists of multiple physical ports. In some embodiments, for an MLD configuration, multiple memory devices may support n-way interleaving, and the interleaved partitions may be assigned to an LD. In some embodiments, an LD can be bound to an upstream port in a virtual switch. In other words, if the bridge **170** has enough bandwidth to support two root ports, the MLD configuration may support two host devices with a root port or one host device with two root ports. In some embodiments, the binding **160** may bind the vPPBs (e.g., bridges **120, 130, 122,** and **132**) to PPBs to connect the virtual switches **100** and **102** to the memory devices **180** and **190** and the pooled memory device **194.** In some embodiments, the virtual switches **100** and **102** may be bound to the root port of a host device. In some embodiments, the root port **150** may connect to the virtual switch **100** via a physical connection between the root port **150** and the bridge **110.** In some embodiments, the root port **152** may connect to the virtual switch **102** via a physical connection between the root port **152** and the bridge **112.** In some embodiments, the virtual switches **100** and **102** may communicate with the root ports **150** and **152** using a memory access protocol (e.g., a CXL protocol).

In some embodiments, multiple MLDs can be connected to a single virtual switch. Furthermore, in some embodiments, a virtual switch can support various combinations of MLDs and LDs. The maximum bandwidth of the virtual switch may be the combination of all the transfer speeds of the downstream ports. For example, if a downstream port has 16 lanes with a transfer speed of 4 GB/s per lane, then a downstream port could support transfer speeds of 64 GB/s. If a switch has four downstream ports, the maximum bandwidth may be 256 GB/s.

In some embodiments, the switch device may set a limit on the total number of hosts that can be mapped on a virtual switch. For example, if a virtual switch with one upstream port using 16 lanes has a transfer speed of 4 GB/s per lane, then the maximum transfer speed would be 64 GB/s. Thus, a virtual switch could support a maximum transfer speed of 64 GB/s. Thus, the limitation on the number of upstream ports on a switch may restrict the total number of hosts that can be mapped to the switch, even though the downstream ports and memory devices have enough internal load/store bandwidth.

In some embodiments, adding additional upstream ports may increase the total transfer speed available on a switch but may require additional hardware. Alternatively, as described in further detail below, port duplication, where a port is duplicated allowing for multiple connections for an upstream port of a virtual switch, may be provided. For example, an upstream port may have multiple duplicated ports (e.g., physical connectors), which can be connected to a host device. In the case of n-way interleaving, an upstream port can be bound to multiple LDs, and data from an LD can be routed into different hosts or different root ports in a single host.

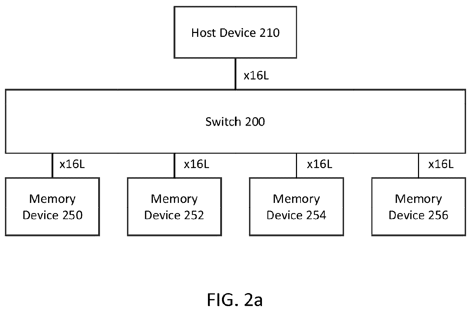

FIG. 2a illustrates an example of an operating environment in accordance with example embodiments of the disclosure. FIG. 2a includes a switch **200,** host device **210,** and memory devices **250, 252, 254,** and **256.** In some embodiments, the memory devices **250, 252, 254,** and **256** may connect to the switch **200** using downstream ports. In some embodiments, a downstream port may support 16 lanes and 4 GB/s per lane. Thus, in some embodiments, a downstream port may support up to 64 GB/s. In some embodiments, the memory devices **250, 252, 254,** and **256** may use 4-way device interleaving to send data to the switch. In some embodiments, the total available bandwidth for the downstream ports may be 256 GB/s. In some embodiments, the host device **210** may connect to the switch **200** using an upstream port. In some embodiments, the upstream port may support 16 lines and 4 GB/s per lane. Thus, the upstream port may support 64 GB/s. In FIG. 2a, in some embodiments, the upstream port may be unable to support the total bandwidth of the downstream ports, causing the downstream ports to not use their total bandwidth capacity.

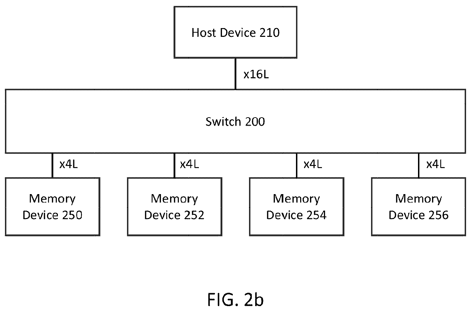

FIG. 2b illustrates another example of an operating environment in accordance with example embodiments of the disclosure. The elements illustrated in Fig. 2b may be similar elements to those illustrated in Fig. 2a in which similar elements may be indicated by reference numbers ending in, and/or containing, the same digits, letters, and/or the like. However, in FIG. 2b, a downstream port may support 4 lanes at 4 GB/s per lane. Thus, the total available bandwidth for the downstream ports may be 64 GB/s. In some embodiments, since the upstream port bandwidth may be 64 GB/s and the downstream port bandwidth may be 64 GB/s, there may not be unused bandwidth. However, this may be the case when the storage devices may only support 4 lanes.

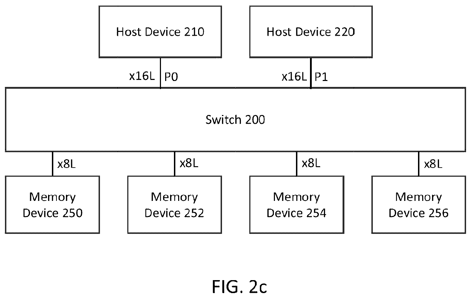

FIG. 2c illustrates another example of an operating environment in accordance with example embodiments of the disclosure. The elements illustrated in Fig. 2c may be similar elements to those illustrated in Fig. 2a in which similar elements may be indicated by reference numbers ending in, and/or containing, the same digits, letters, and/or the like. FIG. 2c further includes a host device **220.** In some embodiments, the host device **210** may connect to the switch **200** using an interface (e.g., P0) and the host device **220** may connect to the switch **200** using an interface (e.g., P1). In some embodiments, the memory devices **250** and **252** may correspond to the host device **210** and the memory devices **254** and **256** may correspond to the host device **220.** In some embodiments, the memory devices **250** and **252** may use 2-way device interleaving, and the memory devices **254** and **256** may use 2-way device interleaving. In some embodiments, a downstream port may support 8 lanes at 4 GB/s per lane. Thus, the total available bandwidth for the downstream ports for the 2-way device interleaving pairs may be 64 GB/s. In some embodiments, the upstream port may support 16 lines and 4 GB/s per lane. Thus, an upstream port may support 64 GB/s. In some embodiments, since the upstream port bandwidth may be 64 GB/s and the downstream port bandwidth may be 64 GB/s for a host device/storage device combination, there may not be unused bandwidth.

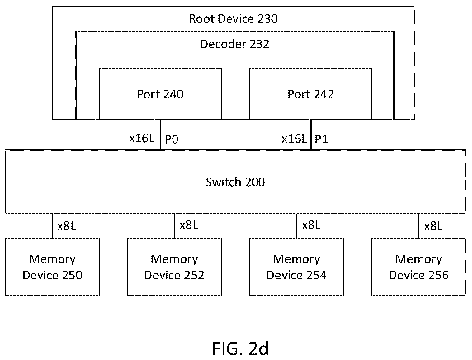

FIG. 2d illustrates another example of an operating environment in accordance with example embodiments of the disclosure. The elements illustrated in Fig. 2d may be similar elements to those illustrated in Fig. 2a in which similar elements may be indicated by reference numbers ending in, and/or containing, the same digits, letters, and/or the like. FIG. 2d further includes a root device **230.** In some embodiments, the root device **230** may include a decoder **232.** In some embodiments, the decoder **232** may include ports **240** and **242.** In some embodiments, the root device may be a root complex. In some embodiments, the root device **230** may allow a host to connect to the switch **200.** In some embodiments, the decoder **232** may be a host-managed device memory (HDM) decoder. In some embodiments, the decoder **232** may map a Host Physical Address (HPA) to a Device Physical Address (DPA) range on the memory devices **250, 252, 254,** and **256.** In some embodiments, the root device **230** may connect to the switch **200** using the port **240** and an interface (e.g., P0) on the switch **200** and using the port **242** and an interface (e.g., P1) on the switch **200.** In some embodiments, the memory devices **250** and **252** may correspond to the port **240** and the memory devices **254** and **256** may correspond to the port **242.** In some embodiments, the memory devices **250** and **252** may use 2-way device interleaving, and the memory devices **254** and **256** may use 2-way device interleaving. In some embodiments, a downstream port may support 8 lanes at 4 GB/s per lane. Thus, the total available bandwidth for the downstream ports for the 2-way device interleaving pairs may be 64 GB/s. In some embodiments, the upstream port may support 16 lines and 4 GB/s per lane. Thus, an upstream port may support 64 GB/s. In some embodiments, since the upstream port bandwidth may be 64 GB/s for a port and the downstream port bandwidth may be 64 GB/s for a port/storage device combination, there may not be unused bandwidth.

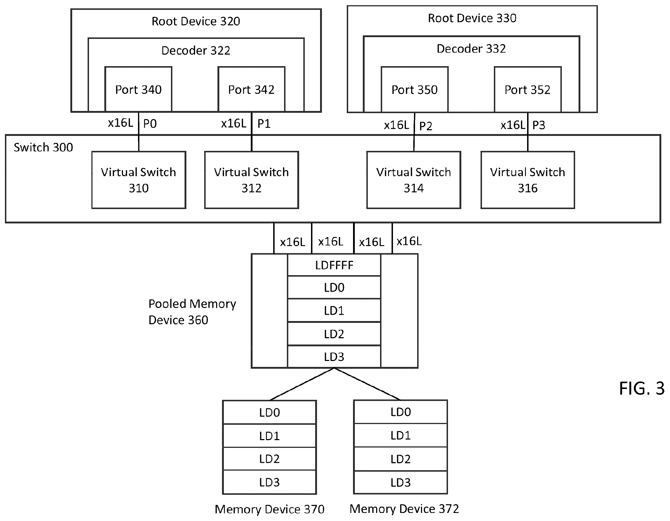

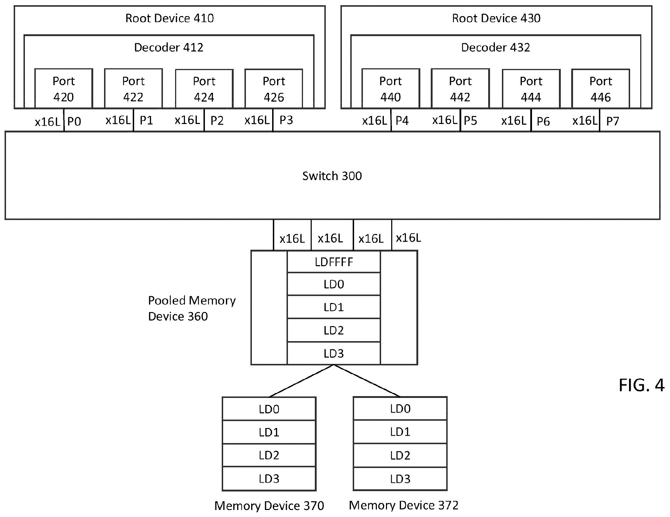

FIG. 3 illustrates an example of multiple host devices and an MLD connected to multiple virtual switches in accordance with example embodiments of the disclosure. For illustrative purposes the virtual switches in FIG. 3 are VCSs. However, a switch may not have VCSs and may include any other suitable type of virtual switch. FIG. 4 includes a switch **300,** root devices **320** and **330,** pooled memory device **360,** and memory devices **370** and **372.** In some embodiments, the switch **300** may include virtual switches **310, 312, 314,** and **316.** In some embodiments, the root device **320** may include a decoder **322** and the root device **330** may include a decoder **332.** In some embodiments, the decoder **322** may include ports **340** and **342,** and the decoder **332** may include ports **350** and **352.** In some embodiments, the root device may be a root complex. In some embodiments, the decoder **332** may be a HDM decoder. In some embodiments, the pooled memory device **360** may be an MLD, with multiple LDs (e.g., LD0 to LD3). In some embodiments, the memory devices **370** and **372** may use 2-way device interleaving corresponding to the LDs in pooled memory device **360.** Although FIG. 3 displays 2-way memory device interleaving, in some embodiments, the pooled memory device **360** may connect to multiple devices and the multiple devices may use n-way device interleaving. In some embodiments, the pooled memory device **360** may connect to the switch **300** using 4 downstream ports with a maximum bandwidth of 256 GB/s. In some embodiments, the virtual switches **310, 312, 314,** and **316** may have physical connectors to the ports **340, 342, 350,** and **352.** (e.g., the virtual switch **310** is mapped to the port **340,** the virtual switch **312** is mapped to the port **342,** the virtual switch **314** is mapped to the port **350,** and the virtual switch **316** is mapped to the port **352**). In some embodiments, a virtual switch may have an interface to the root devices that may be connected to the physical connectors (e.g., P0, P1, P2, P3). In some embodiments, a port may support a bandwidth of 64 GB/s. Thus, in some embodiments, to support a total upstream port speed of 256 GB/s, four virtual switches may be used.

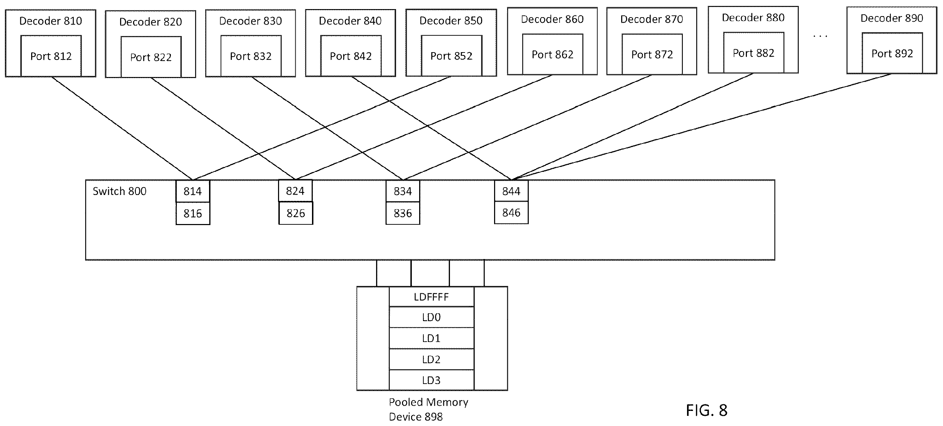

FIG. 4 illustrates another example of multiple host devices and an MLD connected to multiple virtual switches in accordance with example embodiments of the disclosure. The elements illustrated in Fig. 4 may be similar elements to those illustrated in Fig. 3 in which similar elements may be indicated by reference numbers ending in, and/or containing, the same digits, letters, and/or the like. In FIG. 4, illustration of the virtual switches was omitted, but it should be understood that an interface in FIG. 4 (P0, P1, P2, P3, P4, P5, P6, and P7) corresponds to a virtual switch. FIG. 4 may further include root devices **410** and **430,** the root device **410** may include a decoder **412,** and the root device **430** may include a decoder **432.** In some embodiments, the decoder **412** may include ports **420, 422, 424,** and **426;** and the decoder **432** may include ports **440, 442, 444,** and **446.** As illustrated in FIG. 4, 8 virtual switches may support 8 ports on the two root devices. In some embodiments, to support a bandwidth of 256 GB/s to a root device, 4 ports may be used if a port supports a bandwidth of 64 GB/s. Thus, in some embodiments, 8 upstream ports may be available when 4 ports are used at a given time period.

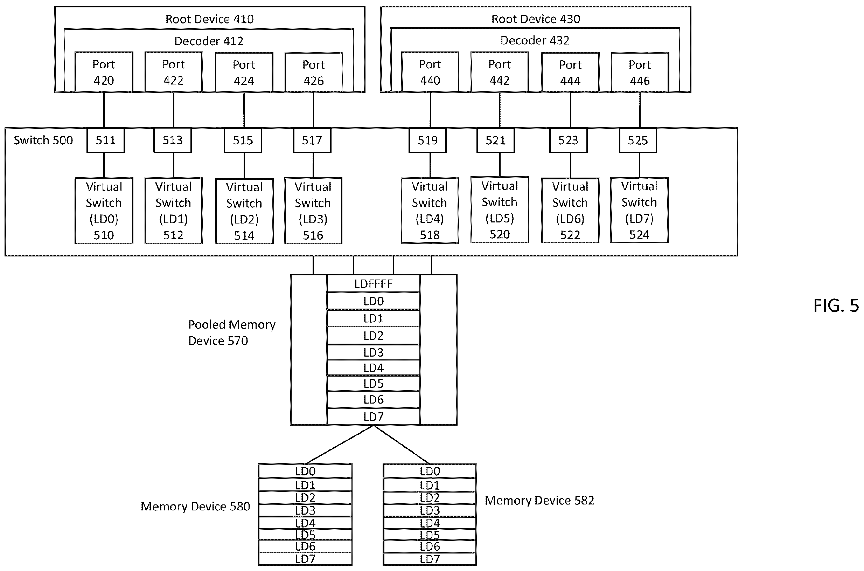

FIG. 5 illustrates another example of multiple host devices and an MLD connected to multiple virtual switches in accordance with example embodiments of the disclosure.

The elements illustrated in Fig. 5 may be similar elements to those illustrated in Fig. 4 in which similar elements may be indicated by reference numbers ending in, and/or containing, the same digits, letters, and/or the like. FIG. 5 further includes a switch **500;** virtual switches **510, 512, 514, 516, 518, 520, 522,** and **524;** interfaces **511, 513, 515, 517, 519, 521, 523, 525;** pooled memory device **570;** and memory devices **580** and **582.** In some embodiments, a virtual switch may correspond to a logical device (e.g., virtual switch **510** may correspond to LD0, virtual switch **512** may correspond to LD1, virtual switch **514** may correspond to LD2, virtual switch **516** may correspond to LD3, virtual switch **518** may correspond to LD4, virtual switch **520** may correspond to LD5, virtual switch **522** may correspond to LD6, and virtual switch **524** may correspond to LD7). In some embodiments, a virtual switch may have a corresponding interface (e.g., virtual switch **510** may correspond to interface **511,** virtual switch **512** may correspond to interface **513,** virtual switch **514** may correspond to interfaces **515,** virtual switch **516** may correspond to interfaces **517,** virtual switch **518** may correspond to interfaces **519,** virtual switch **520** may correspond to interfaces **521,** virtual switch **522** may correspond to interfaces **523,** and virtual switch **524** may correspond to interfaces **525**). Thus, in some embodiments, a virtual switch may be responsible for a logical device on the pooled memory device **570.**

As illustrated in FIG. 5, 8 virtual switches may support 8 ports on the two root devices. In some embodiments, to support a bandwidth of 256 GB/s to a root device, 4 ports may be used if a port supports a bandwidth of 64 GB/s. Thus, in some embodiments, 8 upstream ports may be available when 4 ports are used at a given time period.

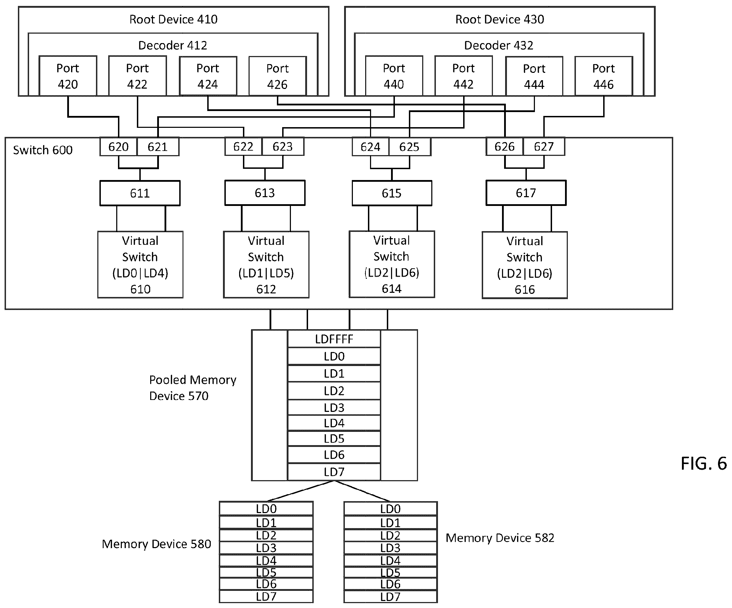

FIG. 6 illustrates another example of multiple host devices and an MLD connected to multiple virtual switches with upstream port duplication in accordance with example embodiments of the disclosure.

The elements illustrated in Fig. 6 may be similar elements to those illustrated in Fig. 5 in which similar elements may be indicated by reference numbers ending in, and/or containing, the same digits, letters, and/or the like. In some embodiments, a switch **600** may include virtual switches **610, 612, 614,** and **616,** interfaces **611, 613, 615, 617,** and physical connectors **620, 621, 622, 623, 624, 625, 626,** and **627.** In some embodiments, a virtual switch may correspond to multiple logical devices (e.g., virtual switch **610** may correspond to LD0 and LD4, virtual switch **612** may correspond to LD1 and LD5, virtual switch **614** may correspond to LD2 and LD6, and virtual switch **516** may correspond to LD3 and LD7). In some embodiments, a virtual switch may have a corresponding interface (e.g., virtual switch **610** may correspond to interface **611,** virtual switch 6**12** may correspond to interface **613,** virtual switch 6**14** may correspond to interface **615,** and virtual switch **616** may correspond to interface **617).** In some embodiments, an interface may have one or more physical connectors (e.g., duplicated ports) (e.g., interface **611** may connect to physical connectors **620** and **621,** interface **613** may connect to physical connectors **622** and **623,** interface **615** may connect to physical connectors **624** and **625,** and interface **617** may connect to physical connectors **626** and **627).** Thus, in FIG. 6, an LD may be mapped to a physical connector (e.g., duplicated port) in a single interface (e.g., upstream port). In some embodiments, since the lanes are not split, bandwidth may not be sacrificed. In some embodiments, a bandwidth of 256 GB/s to two hosts may be supported with 4 upstream ports and 4 virtual switches.

In some embodiments, maximum bandwidth may be supported using only 4 interfaces (e.g., upstream ports) to facilitate eight root ports in two hosts. In some embodiments, port duplication may enable the creation of multiple physical branch ports that can be connected to multiple root ports. In some embodiments, this may be achieved by having a virtual switch correspond to multiple LDs, where an LD can be mapped into duplicated ports in a single interface to the host device. In some embodiments, two LDs may be placed on a single virtual switch, and an LD in the virtual switch may be mapped into a duplicated port of the interface (e.g., upstream port).

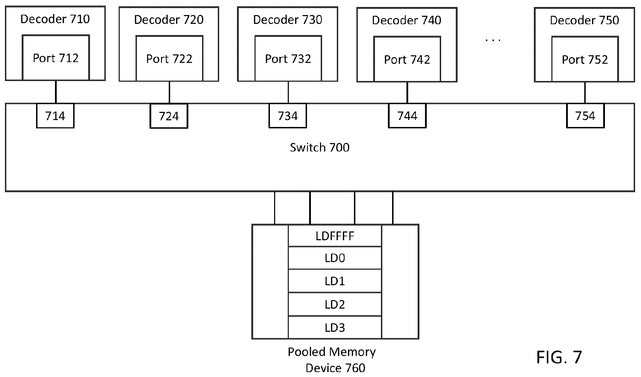

FIG. 7 illustrates an example of multiple decoders connected to multiple virtual switches in accordance with example embodiments of the disclosure. FIG. 7 includes a switch **700,** decoders **710, 720, 730, 740,** and **750,** and pooled memory device **760.** The decoder **710** may include a port **712,** the decoder **720** may include a port **722,** the decoder **730** may include a port **732,** the decoder **740** may include a port **742,** and the decoder **750** may include a port **752.** The switch may include interfaces **714, 724, 734, 744,** and **754.** In some embodiments, interfaces **714, 724, 734, 744,** and **754** may be the interface for a virtual switch. In FIG. 7, interfaces **714, 724, 734, 744,** and **754** are shown. However, there may be many more virtual switches and interfaces. For example, if there are 64 decoders, there may be 64 corresponding virtual switches and interfaces. In some embodiments, switch **700** may use 64 virtual switches to support 64 decoders, when a virtual switch has a single interface (e.g., upstream port).

FIG. 8 illustrates an example of multiple decoders connected to multiple virtual switches with upstream port duplication in accordance with example embodiments of the disclosure.

FIG. 8 includes a switch **800,** decoders **810, 820, 830, 840, 850, 860, 870, 880,** and **890,** and pooled memory device **898.** The decoder **810** may include a port **812,** the decoder **820** may include a port **822,** the decoder **830** may include a port **832,** the decoder **840** may include a port **842,** the decoder **850** may include a port **852,** the decoder **860** may include a port **862,** the decoder **870** may include a port **872,** the decoder **880** may include a port **882,** and the decoder **890** may include a port **892.** The switch **800** may include interfaces **816, 826, 836,** and **846,** and 16 physical connectors **814, 824, 834, 844.** In some embodiments, interfaces **816, 826, 836,** and **846** may be the interface for a virtual switch. In some embodiments, an interface may have multiple physical connectors. For example, FIG. 8 illustrates 16 physical connectors for an interface (e.g., interface **816** may be connected to 16 physical connectors **814,** interface **826** may be connected to 16 physical connectors **824,** interface **836** may be connected to 16 physical connectors **834,** and interface **846** may be connected to 16 physical connectors **844).** Thus, in some embodiments, switch **800** may include virtual switches with multiple physical connectors (e.g., upstream port duplication). For example, an interface may be connected to 16 physical connectors, and thus, to support 64 decoders, 4 virtual switches (e.g., 4 interfaces) may be used.

In some embodiments, a decoder may be coupled to the switch **800** with a transfer speed of 64 GB/s. To maximize bandwidth, in some embodiments, a given host device may only occupy the physical port for a given interval. In some embodiments, in the event that both host devices for a given upstream port attempt to access the port concurrently, one host device may wait for the port to be free before accessing the port, thus reducing the bandwidth for the upstream port. In other words, by freeing up the upstream port for another host device to access the upstream port, the switch can achieve at least the same bandwidth as a switch without port duplication, but the bandwidth utilization can be increased when a host device fairly shares the upstream port.

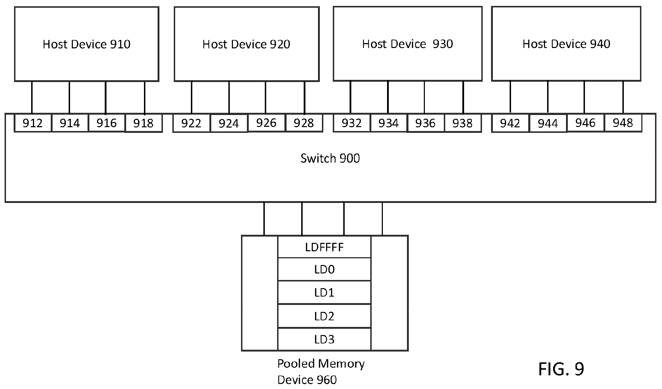

FIG. 9 illustrates an example of a switch in accordance with example embodiments of the disclosure. FIG. 9 includes a switch **900,** host devices **910, 920, 930,** and **940,** and pooled memory device **960.** In some embodiments, host devices **910, 920, 930,** and **940** may include 4 ports. In other words, 16 ports of the 4 host devices. In some embodiments, the switch **900** may include interfaces **912, 914, 916, 918, 922, 924, 926, 928, 932, 934, 936, 938, 942, 944, 946,** and **948.** In some embodiments, interfaces **912, 914, 916, 918, 922, 924, 926, 928, 932, 934, 936, 938, 942, 944, 946,** and **948** may respectively correspond to a virtual switch. In some embodiments, the switch 900 may include 16 virtual switches with a single interface to support the 4 host devices. In some embodiments, since the maximum downstream bandwidth may be 256 GB/s, the maximum upstream bandwidth may be 256 GB/s. Thus, in some embodiments, 16 virtual switches may support 4 host devices with a maximum bandwidth of 256 GB/s.

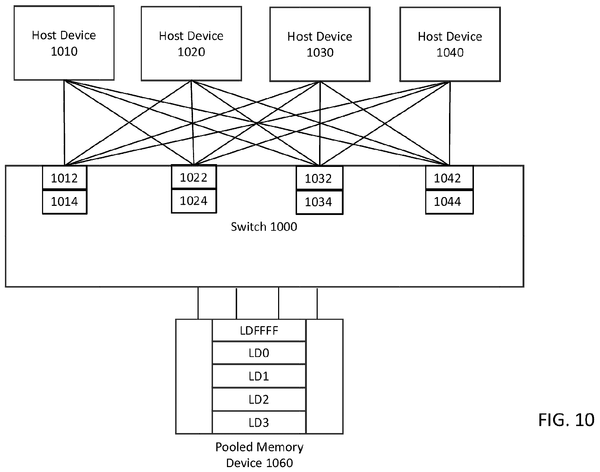

FIG. 10 illustrates an example of a switch with upstream port duplication in accordance with example embodiments of the disclosure.

FIG. 10 includes a switch **1000,** host devices **1010, 1020, 1030,** and **1040,** and pooled memory device **1060.** In some embodiments, the host devices **1010, 1020, 1030,** and **1040** may respectively include 4 ports. In other words, 16 ports may be used between the 4 host devices. In some embodiments, the switch **1000** may include interfaces **1014, 1024, 1034,** and **1044,** and 4 physical connectors **1012, 1022, 1032,** and **1042.** In some embodiments, interfaces **1014, 1024, 1034,** and **1044** may respectively be the interface for a virtual switch (e.g., interface **1014** may be part of a virtual switch, interface **1024** may be part of a different virtual switch, interface **1034** may be part of a different virtual switch, and interface **1044** may be part of a different virtual switch). In some embodiments, an interface may have multiple physical connectors. For example, FIG. 10 illustrates 4 physical connectors for an interface (e.g., interface **1014** may be connected to 4 physical connectors **1012,** interface **1024** may be connected to 4 physical connectors **1022,** interface **1034** may be connected to 4 physical connectors **1032,** and interface **1044** may be connected to 4 physical connectors **1042).** Thus, in some embodiments, switch **1000** may include virtual switches with multiple physical connectors (e.g., upstream port duplication). For example, an interface may be connected to 4 physical connectors, and thus, to support 4 host devices with 4 ports, 4 virtual switches (e.g., 4 interfaces) may be used. In some embodiments, since the maximum downstream bandwidth may be 256 GB/s, the maximum upstream bandwidth may also be 256 GB/s. Thus, in some embodiments, 4 virtual switches with upstream port duplication may support 4 host devices with a maximum bandwidth of 256 GB/s.

In the example of FIG. 10, fully meshed port duplication may be used, which supports 4-way interleaving in a host, and a host may have four upstream port mappings. This configuration may allow for a maximum bandwidth of 256GB/s with only four upstream ports. In a worst-case scenario, if all ports in all hosts are fully utilized, the maximum bandwidth for a host may be decreased to one-fourth, e.g., 64GB/s, which would be the same bandwidth without port duplication.

In some embodiments, no change to the virtual switch may be required. In other words, the virtual switch may have a single interface (e.g., upstream port). In that case, a port duplication layer may be used to duplicate the upstream port. In some embodiments, a selector for the upstream port may be used to direct the transfer of data between the host devices. For example, a port duplication layer may direct the data to host 1 and/or host 2. In some embodiments, the virtual switch layer may not be aware of the port duplication and connect to a single upstream port. In some embodiments, the port duplication layer may use a selector so that the upstream port can use a physical connector between the switch and a host. In some embodiments, the host duplication layer can be either hardware or software. Furthermore, in some embodiments, a driver may synchronize data transfer between multiple hosts.

In some embodiments, when a host supports an HDM decoder, a host may achieve 4-way interleaving. In some embodiments, if a host device maps four upstream ports with 16 lanes, the maximum bandwidth may be 256GB/s per host device. To support four hosts with 4-way interleaving, the switch may support 16 upstream ports and 16 lanes. Potentially, 16 upstream ports and 16 lanes can support a bandwidth of up to 16 x 16 x 4 = 1 TB/s, but a switch for four hosts may only allow for support of 256GB/s per host.

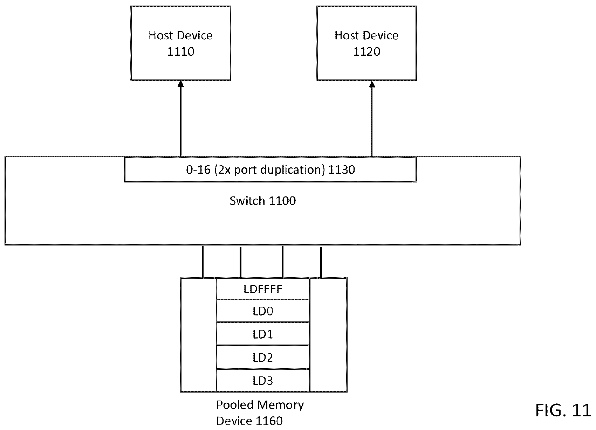

FIG. 11 illustrates an example of a switch with upstream port duplication in accordance with example embodiments of the disclosure. FIG. 11 includes a switch **1100,** host devices **1110** and **1120,** and pooled memory device **1160.** In some embodiments, the pooled memory device **1160** may connect to the switch **1100** using 16 interfaces (e.g., downstream ports). In some embodiments, 16 interfaces may provide a maximum bandwidth of 1 TB/s. In some embodiments, the host devices **1110** and **1120** may have a total of 16 ports. In other words, the host devices **1110** and **1120** may have a bandwidth capable of 1 TB/s. A host device may be capable of speeds of 1 TB/s using, e.g., High Bandwidth Memory (HBM) for applications such as artificial intelligence (AI). In some embodiments, if the switch **1100** has port duplication for 16 virtual switches **1130,** the switch **1100** can transfer 1 TB/s to the host devices **1110** and **1120.** Thus, in some embodiments, memory extension for AI acceleration can be provided, since the memory bandwidth may be comparable with HBM (1 TB/s in this example).

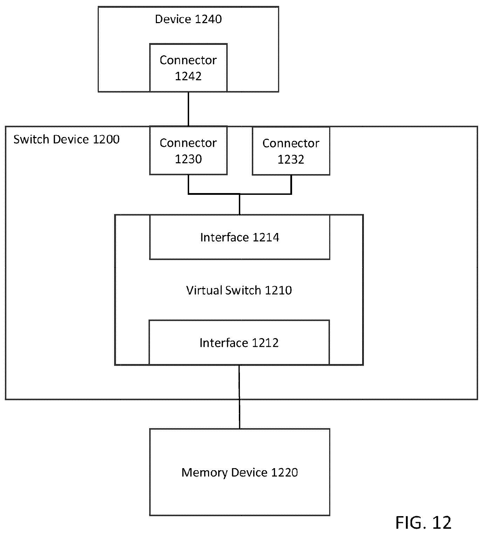

FIG. 12 illustrates an example of a switch device in accordance with example embodiments of the disclosure. FIG. 12 includes an apparatus (e.g., switch device **1200),** a host device (e.g., device **1240),** and a memory device **1220.** In some embodiments, the switch device may include a virtual switch **1210** and connectors **1230** and **1232.** In some embodiments, the virtual switch **1210** may include a first interface **1212** and a second interface **1214.** In some embodiments, the device **1240** may include a connector **1242.** Although memory device **1220** is illustrated, the switch device **1200** may connect to multiple memory devices. In some embodiments, the switch device in FIG. 12 may be used as the switch device in any of FIGs. 6, 8, 10 or 11.

In some embodiments, the switch device **1200** may communicate with the memory device **1220** using a virtual switch **1210.** For example, the memory device **1220** may connect to a first interface **1212.** In some embodiments, the first interface may support 16 lanes at 4 GB/s per lane or 64 GB/s total per interface. In some embodiments, if the virtual switch **1210** has 4 interfaces to communicate with the memory devices, 256 GB/s may be supported.

In some embodiments, the virtual switch **1210** may communicate with the device **1240** using a second interface **1214.** For example, the second interface **1214** may communicate with the device **1240** using the connector **1230.** In some embodiments, the second interface **1214** may also communicate with the device **1240** or another device using connector **1232.** As illustrated in FIG. 12, the connector **1230** may communicate with the connector **1242** of the device **1240.** In some embodiments, the connector **1230** may support 16 lanes at 4 GB/s per lane or 64 GB/s total per interface. In some embodiments, the connector **1232** may also support 16 lanes at 4 GB/s per lane or 64 GB/s total per interface. Thus, in this example, the virtual switch **1210** may support 128 GB/s to one or more devices (e.g., host devices). As more connectors are added to the second interface **1214,** using port duplication, the bandwidth available to the upstream port may be increased.

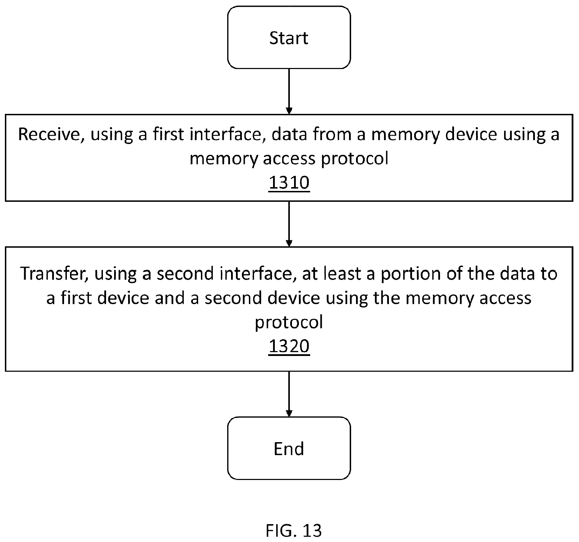

Fig. 13 is a flowchart of an example method for upstream port duplication in a virtual switch.

At step 1310, data may be received from a memory device using a first interface using a memory access protocol. For example, a switch can connect to a memory device by one or more vPPBs. In some embodiments, a vPPB may be capable of a transfer speed of 64 GB/s. In some embodiments, the memory device can be a CXL-compatible device or any other device capable of coupling with a virtual switch of a switch. In some embodiments, the switch may communicate with the memory device using a memory access protocol (e.g., a CXL protocol).

At step 1320, at least a first portion of data may be transferred to a first host device and a second host device using a second interface using the memory access protocol. For example, the switch may have a vPPB connected to a root port of the host device. In some embodiments, the vPPB may have a transfer speed of 64 GB/s. Thus, the switch can read data from the memory devices faster than it can be transferred to the host device. In some embodiments, the vPPB may be connected to a root port of a second host device using a duplicated port. Thus, for example, the vPPB can have a total transfer speed of 128 GB/s (e.g., 64 GB/s for the first host device and 64 GB/s for the second host device). In some embodiments, a second virtual switch can have a duplicated port coupled to the first host device and second host device. Thus, the total transfer speed may be 256 GB/s where the upstream port may include a first duplicated port. In some embodiments, the switch may communicate with the first host device and second host device using a memory access protocol (e.g., a CXL protocol).

The principles disclosed herein have independent utility and may be embodied individually, and not every embodiment may utilize every principle. However, the principles may also be embodied in various combinations, some of which may amplify the benefits of the individual principles in a synergistic manner.

For purposes of illustrating the inventive principles of the disclosure, some example embodiments may be described in the context of specific implementation details such as a processing system that may implement a NUMA architecture, memory devices, and/or pools that may be connected to a processing system using an interconnect interface and/or protocol Compute Express Link (CXL), and/or the like. However, the principles are not limited to these example details and may be implemented using any other type of system architecture, interfaces, protocols, and/or the like.

Although some example embodiments may be described in the context of specific implementation details such as a processing system that may implement a NUMA architecture, memory devices, and/or pools that may be connected to a processing system using an interconnect interface and/or protocol CXL, and/or the like, the principles are not limited to these example details and may be implemented using any other type of system architecture, interfaces, protocols, and/or the like. For example, in some embodiments, one or more memory devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, an interconnect interface may be implemented with one or more memory semantic and/or memory coherent interfaces and/or protocols including one or more CXL protocols such as CXL.mem, CXL.io, and/or CXL. cache, Gen-Z, Coherent Accelerator Processor Interface (CAPI), Cache Coherent Interconnect for Accelerators (CCIX), and/or the like, or any combination thereof. Any of the memory devices may be implemented with one or more of any type of memory device interface including DDR, DDR2, DDR3, DDR4, DDR5, LPDDRX, Open Memory Interface (OMI), NVLink, High Bandwidth Memory (HBM), HBM2, HBM3, and/or the like.

In some embodiments, any of the memory devices, memory pools, hosts, and/or the like, or components thereof, may be implemented in any physical and/or electrical configuration and/or form factor such as a free-standing apparatus, an add-in card such as a PCIe adapter or expansion card, a plug-in device, for example, that may plug into a connector and/or slot of a server chassis (e.g., a connector on a backplane and/or a midplane of a server or other apparatus), and/or the like. In some embodiments, any of the memory devices, memory pools, hosts, and/or the like, or components thereof, may be implemented in a form factor for a storage device such as 3.5 inch, 2.5 inch, 1.8 inch, M.2, Enterprise and Data Center SSD Form Factor (EDSFF), NF1, and/or the like, using any connector configuration for the interconnect interface such as a SATA connector, SCSI connector, SAS connector, M.2 connector, U.2 connector, U.3 connector, and/or the like. Any of the devices disclosed herein may be implemented entirely or partially with, and/or used in connection with, a server chassis, server rack, dataroom, datacenter, edge datacenter, mobile edge datacenter, and/or any combinations thereof. In some embodiments, any of the memory devices, memory pools, hosts, and/or the like, or components thereof, may be implemented as a CXL Type-1 device, a CXL Type-2 device, a CXL Type-3 device, and/or the like.

In some embodiments, any of the functionality described herein, including, for example, any of the logic to implement tiering, device selection, and/or the like, may be implemented with hardware, software, or a combination thereof including combinational logic, sequential logic, one or more timers, counters, registers, and/or state machines, one or more complex programmable logic devices (CPLDs), field programmable gate arrays (FPGAs), application specific integrated circuits (ASICs), central processing units (CPUs) such as complex instruction set computer (CISC) processors such as x86 processors and/or reduced instruction set computer (RISC) processors such as ARM processors, graphics processing units (GPUs), neural processing units (NPUs), tensor processing units (TPUs) and/or the like, executing instructions stored in any type of memory, or any combination thereof. In some embodiments, one or more components may be implemented as a system-on-chip (SOC).

In this disclosure, numerous specific details are set forth in order to provide a thorough understanding of the disclosure, but the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

When an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" may include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

The term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth. Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. An apparatus comprising:
a switch (1200) comprising:
a first interface (1212) configured to communicate with at least one memory device (570, 580, 582; 1220); and
a second interface (611; 1214) configured to communicate with a first physical connector (620; 1230) and a second physical connector (621; 1232); wherein the switch (1200) is configured to communicate with a device (410; 1240) using the first physical connector (620; 1230) using a memory access protocol.

2. The apparatus of claim 1, wherein the first physical connector (1230) is configured to connect to a connector (1242) on the device (1240).

3. The apparatus of any one of claims 1 or 2, wherein the first physical connector (620; 1230) is configured to send data to the device (1240) from the at least one memory device (570, 580, 582; 1220).

4. The apparatus of any one of claims 1 to 3, wherein the device (410; 1240) is a first device; and wherein the second physical connector (621; 1232) is configured to send data to a second device (430) from the at least one memory device (570, 580, 582; 1220).

5. The apparatus of any one of claims 1 to 3, wherein the device (410; 1240) is a first device; and wherein the second interface (1214) is configured to communicate with a second device (430) using the second physical connector (621; 1232) using the memory access protocol.

6. The apparatus of any one of claims 1 to 3,
wherein the switch (1200) is a first switch (610);
wherein the apparatus further comprises a second switch (612); and
wherein the second switch (612) comprises:
a third interface configured to communicate with the at least one memory device (570, 580, 582; 1220); and
a fourth interface (613) configured to communicate with a third physical connector (622) and a fourth physical connector (623), wherein the second switch (612) is configured to communicate with the device (410) using the third physical connector (622) using the memory access protocol.

7. The apparatus of claim 6, wherein the device (410) is a first device; and wherein the apparatus is further configured to connect to a second device (430) using the second physical connector (621) on the first switch (610) and the fourth physical connector (623) on the second switch (612), exemplarily using the memory access protocol.

8. The apparatus of claim 6, wherein the second physical connector (623) is configured to connect to a connector on a second device (430), and/or wherein the fourth physical connector (623) is configured to connect to a connector on the second device (430).

9. The apparatus of any one of claims 1 to 8, wherein a same data from the at least one memory device (570, 580, 582; 1220) is sent to the first physical connector (620; 1230) and the second physical connector (621; 1232).

10. A system comprising:
a device (1240);
a memory device (570, 580, 582; 1220), and
the switch device according to any one of claims 1 to 9, wherein the switch device (1200) comprises a virtual switch (1210), the virtual switch (1210) comprising:
the first interface (1212) configured to communicate with the memory device (570, 580, 582; 1220); and
the second interface (1214) configured to communicate with the first physical connector (1230) and the second physical connector (1232), wherein the switch device (1200) is configured to communicate with the device (1240) using the first physical connector (1230) using the memory access protocol.

11. A method comprising:
receiving (1310), at a virtual switch (610; 1210) using a first interface (1212), data from a memory device (570, 580, 582; 1220) using a memory access protocol; and
transferring (1320), from the virtual switch (610; 1210) using a second interface (611; 1214), at least a portion of the data to a first device (410; 1240) and a second device (430) using the memory access protocol.

12. A method of claim 11, wherein the second interface (611) comprises a first connector (620) and a second connector (621); and wherein the transferring at least a portion of the data to a first device (410; 1240) and a second device (430) using the memory access protocol comprises:
transferring, using the first connector (620), the at least a portion of the data to the first device (410) using the memory access protocol; and
transferring, using the second connector (621), the at least a portion of the data to the second device (430) using the memory access protocol.

13. The method of claim 11 or 12, wherein the at least a portion of the data is a first portion of data; and wherein the method further comprises:
transferring, from the second interface (611), at least a second portion of the data to the second device (430).

14. The method of any one of claims 11 to 13,
wherein the virtual switch (610) is a first virtual switch;
wherein the data is first data; and
wherein the method further comprises:
receiving, at a second virtual switch (612) using a third interface, second data from the memory device (570, 580, 582; 1220) using the memory access protocol; and
transferring, from the second virtual switch (612) using a fourth interface, at least a portion of the second data to the first device (410) and the second device (420).

15. The method of claim 14,
wherein the at least a portion of the first data is a first portion;
wherein the at least a portion of the second data is a second portion; and
wherein the method further comprises interleaving the first portion and the second portion.
